# EUROPÄISCHE PATENTSCHRIFT

(11) **EP 3 107 732 B1**
(45) Veröffentlichungstag und Bekanntmachung des Hinweises auf die Patenterteilung: **07.07.2021**
(21) Anmeldenummer: 15702284.9
(22) Anmeldetag: 04.02.2015
(51) Int. Cl.: B32B 37/00, B42D 25/00, C08J 5/04, C08J 5/18

(54) **VERFAHREN ZUR HERSTELLUNG EINER POLYMERSCHICHT MIT MINDESTENS EINEM DARIN ENTHALTENEN FEINTEILIGEN FESTSTOFF UND VERFAHREN ZUR HERSTELLUNG EINES FOLIENKÖRPERS**
METHOD FOR PRODUCING A POLYMER LAYER HAVING AT LEAST ONE FINELY DIVIDED SOLID CONTAINED THEREIN AND METHOD FOR PRODUCING A FILM BODY
PROCÉDÉ DE FABRICATION D'UNE COUCHE DE POLYMÈRE CONTENANT AU MOINS UN SOLIDE FINEMENT DIVISÉ ET PROCÉDÉ DE FABRICATION D'UN ÉLÉMENT EN FORME DE FEUILLE

(30) Priorität: 20.02.2014 DE 102014203080
(43) Veröffentlichungstag der Anmeldung: 28.12.2016
(73) Patentinhaber: Bundesdruckerei GmbH, 10969 Berlin (DE)
(72) Erfinder: GUTMANN, Roland, 14612 Falkensee (DE); KRÜGER, Per, 14197 Berlin (DE)
(74) Vertreter: Patentanwälte Bressel und Partner mbB
(86) Internationale Anmeldenummer: PCT/EP2015/052233
(87) Internationale Veröffentlichungsnummer: WO 2015/124423

(56) Entgegenhaltungen:
- EP-A1- 0 066 854
- US-A- 4 904 385
- US-A- 5 424 119

## Beschreibung

Die vorliegende Erfindung betrifft ein Verfahren zur Herstellung einer Polymerschicht mit mindestens einem darin enthaltenen feinteiligen Feststoff, beispielsweise mit Melierfasern, und ein Verfahren zur Herstellung eines Folienkörpers, wobei mindestens eine Polymerfolie verwendet wird, die aus der nach dem erfindungsgemäßen Herstellungsverfahren hergestellten Polymerschicht gebildet ist. Derartige Folienkörper werden typischerweise als Wert- oder Sicherheitsprodukte eingesetzt, beispielsweise von Identitätsdokumenten oder Wertdokumenten, wie Banknoten, Schecks oder anderen Wertpapieren.

Melierfasern sind in Wert- oder Sicherheitsdokumenten, beispielsweise Banknoten, enthalten. Sie dienen in diesen Dokumenten als Sicherheitsmerkmale, die deren Fälschung oder Verfälschung verhindern oder zumindest erschweren sollen. Melierfasern sind in Banknotenpapier eingebrachte oder auf die Oberflächen von Vorprodukten von Dokumenten aufgebrachte Fasern mit einer gegenüber der Farbe des Dokuments verschiedenen Farbe, beispielsweise einer Lumineszenzfarbe, sodass sie optisch erkennbar sind. Beispielsweise können sie sich hinsichtlich der Absorption oder Lumineszenz von dem umgebenden Dokumentenmaterial unterscheiden. Lumineszierende Melierfasern sind unter Beleuchtung mit Tageslicht nicht oder nur sehr schwer wahrnehmbar, während sie unter Beleuchtung mit UV-Licht aufgrund der Lumineszenz der darin enthaltenen Lumineszenzfarbstoffe deutlich erkennbar sind. Für die Herstellung von Banknoten werden die Melierfasern der Papiermasse zugegeben, aus denen die Banknoten hergestellt werden, sodass sie im Papiermaterial enthalten sind (DE 103 24 630 A1).

Zum Einbringen von Melierfasern in Wert- oder Sicherheitsdokumente, wie einen Personalausweis, Pass, Führerschein, eine Bank- oder Kreditkarte und dergleichen, wird typischerweise zunächst eine Teillage des Dokuments mit den Melierfasern ausgerüstet, bevor diese Teillage und weitere Teillagen zusammengetragen und miteinander verbunden werden. Zum Ausrüsten einer Teillage mit Melierfasern können diese auf die Teillage aufgestreut und auf der Teillagenoberfläche fixiert werden. Der Aufstreuvorgang wird im Allgemeinen manuell vorgenommen. Diese Vorgehensweise ist jedoch nachteilig, weil sie zeit- und kostenaufwändig und wegen ihrer Störanfälligkeit nur schwer automatisierbar ist.

Dabei sind die Melierfasern nicht ausreichend gleichmäßig und insbesondere mit der gebotenen Wiederholgenauigkeit auf die Teillage aufbringbar. Darüber hinaus neigen die Melierfasern dazu, zu größeren Einheiten zu aggregieren (zu verklumpen), sodass ihre Aufbringung erschwert wird, sowie dazu, wegen ihrer geringen Größe und geringen Masse leicht in die Umgebung überzutreten, sodass das manuelle Auftragsverfahren nicht reinraumtauglich ist.

In DE 10 2009 040 746 A1 sind diverse Dokumente zum Stand der Technik angegeben, die die Verwendung von Melierfasern in Banknotenpapier betreffen. Ferner gibt dieses Dokument zum Aufstreuen von Melierfasern auf Kunststofffolien bei der Herstellung von Wert- oder Sicherheitsdokumenten ein Verfahren an, mit dem das Problem, dass sich die Melierfasern beim Aufstreuvorgang von der Kunststofffolie leicht wieder lösen, bevor sie beim abschließenden Laminiervorgang der Kunststofffolien fixiert werden, gelöst werden kann. Dieses Verfahren besteht darin, die Melierfasern in kontrollierter Weise auf die Kunststofffolien aufzubringen und sie dort zu fixieren. Hierzu können die Melierfasern beispielsweise zumindest teilweise aus einem Kleber gebildet sein.

Melierfasern sind äußerst klein und leicht und haften daher ohne weiteres an beliebigen Oberflächen: Sie haben typischerweise eine Länge von 2 bis 25 mm, bevorzugt 6 mm, und einen Durchmesser von 20 bis 150 µm, bevorzugt 50 bis 60 µm. Daher neigen diese Fasern dazu, in einem nicht aufgestreuten Zustand eine verfilzte oder zumindest zusammenhängende Masse zu bilden, ferner gegebenenfalls durch elektrostatische Aufladung an Oberflächen (adhäsiv) zu haften und sich daher kaum vereinzeln zu lassen, um gleichmäßig und in geringer Dichte auf ein Substrat aufgestreut zu werden.

Ein zum Aufbringen von Melierfasern auf ein Substrat geeignetes Verfahren und eine hierfür geeignete Vorrichtung sind in DE 10 2011 084 609 A1 angegeben. Gemäß dieser Druckschrift wird ein Auftragswerk zum Auftragen von Streugut auf das Substrat verwendet, das ein Streugehäuse mit einem Gehäuseinnenraum zur Aufnahme des Streugutes aufweist und wobei der Gehäuseinnenraum durch eine Vereinzelungsvorrichtung nach unten abgeschlossen ist und sich in dem Gehäuseinnenraum mindestens ein Rotor befindet, der um eine Rotationsachse drehbar ist und der jeweils mindestens eine sich parallel zur Rotationsachse erstreckende Rotorschaufel aufweist. Der mindestens eine Rotor ist mit seiner Rotationsachse parallel zur Vereinzelungsvorrichtung angeordnet.

Aus US 4,904,385 A geht ein Verfahren zum Herstellen eines porösen faserverstärkten Filtermaterials hervor, bei dem eine wässrige Aufschlämmung von Verstärkungsfasern, eines schmelzbaren Polymers und eines Bindemittels auf einem porösen Träger verteilt wird, woraufhin die Flüssigkeit abläuft und eine nasse Matte entsteht, die dann gegebenenfalls zwischen Presswalzen geführt und getrocknet wird.

In US 5,424,119 A ist ein Polymerbogen mit darin verteilten interferenz-Dünnschicht-Flocken angegeben. Zu dessen Herstellung kann ein Gießverfahren angewendet werden. Hierzu wird das gelöste Polymer mit den Flocken vermischt, in einem herkömmlichen Schlitzapplikator verarbeitet und anschließend getrocknet. Derartige Polymerbogen können zur Herstellung von Sicherheitsdokumenten, wie Banknoten und Kreditkarten, eingesetzt werden.

Auch mit dieser Vorrichtung und dem mit dieser Vorrichtung ausführbaren Auftragsverfahren bestehen Probleme beim Integrieren von derartigen feinteiligen Feststoffen in ein Wert- oder Sicherheitsprodukt. Es ist zwar vorteilhaft, den Kleber vorzusehen, um zu vermeiden, dass die auf die Oberfläche einer Folie aufgestreuten Melierfasern die Produktionsumgebung dadurch verunreinigen, dass sie auf der Folienoberfläche nicht haften und sich daher leicht wieder ablösen können. Andererseits ist es aber aufwändig, Melierfasern mit einem zusätzlichen Klebermantel herzustellen. Auch bei einer halbautomatischen Einstreuung der Fasern hängt die Vereinzelung der Fasern von der Luftfeuchtigkeit bei der Verarbeitung, vom Trocknungsgrad der Fasern und deren Lagerbedingungen ab. Bei einer automatisierten Applikation müssen dann die Prozessparameter, wie die Heiz- und die Kühltemperatur geregelt werden. Gegebenenfalls ist es auch notwendig, die Folienoberflächen vor dem Aufbringen der Fasern antistatisch vorzubehandeln, beispielsweise mittels Plasma- oder Coronabehandlung. Außerdem müssen die Fasern über geeignete Spender (wie in DE 10 2011 084 609 A1 beschrieben) automatisiert zugeführt werden. Trotz aller Maßnahmen ist es immer wieder beobachtet worden, dass sich Fasern büschelweise zusammenlagern und daher dann nicht mehr vereinzelt auf die Folienoberfläche gelangen.

Soweit in der Beschreibung und in den Ansprüchen der vorliegenden Anmeldung der Begriff ,Wert- oder Sicherheitsprodukt', das insbesondere ein Wert- oder Sicherheitsdokument oder ein Sicherheitselement in Form eines Transferelements sein kann, verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte,ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton, Haftetikett (beispielsweise zur Produktsicherung) oder ein anderes Dokument zu verstehen. Ein erfindungsgemäßes Produkt kann auch ein Sicherheitselement sein, das das erfindungsgemäße Sicherheitsmerkmal aufweist und das mit dem Dokument unlösbar verbunden werden kann, beispielsweise ein Aufkleber, Etikett oder dergleichen, um das Dokument mit dem Sicherheitsmerkmal zu versehen. Das Produkt kann beispielsweise eine Smartcard sein. Das Sicherheits- oder Wertdokument kann im ID 1-, ID 2-, ID 3- oder in irgendeinem anderen normierten oder nicht normierten Format vorliegen, beispielsweise in Heftform, wie bei einem passähnlichen Gegenstand. Ein Wert- oder Sicherheitsprodukt ist im Allgemeinen ein Laminat aus mehreren Dokumentenlagen, die passergenau unter Wärmeeinwirkung und unter erhöhtem Druck flächig miteinander verbunden worden sind. Diese Produkte sollen den normierten Anforderungen genügen, beispielsweise ISO 10373, ISO/IEC 7810, ISO 14443. Die Produktlagen bestehen beispielsweise aus einem Material, das sich für eine Lamination eignet.

Das Wert- oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier. Außerdem kann das Produkt auch aus mehreren dieser Materialien hergestellt sein. Bevorzugt besteht es aus PC oder PC/TPU/PC. Die Polymere können entweder ungefüllt oder gefüllt vorliegen. Im ersteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutzlack. Bevorzugt wird das Produkt aus 3 bis 12, vorzugsweise 4 bis 10 Folien (einschließlich des Trägers einer darin enthaltenen Datenübertragungseinrichtung), hergestellt. Ein solcherart gebildetes Laminat kann abschließend ein- oder beidseitig mit einem Schutzlack überzogen werden. Derart gebildete Overlaylagen schützen ein darunter angeordnetes Sicherheitsmerkmal und/oder verleihen dem Dokument die erforderliche Abriebfestigkeit. Das Sicherheitsmerkmal ist vorzugsweise auf einer der inneren Lagen gebildet.

Soweit in der Beschreibung und in den Ansprüchen der vorliegenden Anmeldung der Begriff 'Sicherheitsmerkmal' genannt wird, ist darunter ein Merkmal zu verstehen, das einen mittels optischer Erkennungsverfahren, einschließlich dem menschlichen Auge, ermittelbaren optischen Eindruck hervorruft, der durch ein farbiges, insbesondere lumineszierendes (photo- oder elektrolumineszierendes; fluoreszierendes, phosphoreszierendes), Muster von in einer relativen Anordnung zueinander angeordneten Teilchen von feinteiligem Feststoff, insbesondere von Fasern, ganz besonders bevorzugt von Melierfasern, erzeugt wird. Der optische Eindruck kann entweder von einem Betrachter direkt wahrgenommen und ausgewertet oder mittels einer elektromagnetische Strahlung ortsaufgelöst aufnehmenden Vorrichtung erfasst werden und in letzterem Falle durch einen Betrachter wahrgenommen oder mittels einer hierfür vorgesehenen weiteren Vorrichtung ausgewertet werden.

Soweit in der Beschreibung und in den Ansprüchen der vorliegenden Anmeldung der Begriff ,feinteiliger Feststoff' verwendet wird, sind darunter Teilchen eines bestimmten Feststoffes zu verstehen, die eine beliebige Form haben können, beispielsweise plättchen-, stäbchen-, kugelförmige oder unregelmäßig geformte Teilchen (Körnchen), einschließlich Fasern und andere langgestreckte Körper, die durch ein großes Verhältnis von deren Länge zu deren Durchmesser gekennzeichnet sind, und dergleichen, beispielsweise Planchetten. Die Teilchen haben typischerweise eine Größe (einen Durchmesser der Körnchen oder Fasern) von 10 bis 500 µm, vorzugsweise 30 bis 150 µm und ganz besonders bevorzugt 40 bis 100 µm. Zur Herstellung von Fasern kann beispielsweise ein Filament mit zum Beispiel 25 dtex (ISO 1144) eingesetzt werden, das in Filamentstückchen (Fasern) geschnitten wird. Die Teilchen des Streugutes können in mehreren Typen vorliegen, die sich beispielsweise durch eine mit dem menschlichen Auge wahrnehmbare Farbe, deren Form, Durchmesser, Dicke, durch eine Faserlänge und dergleichen voneinander unterscheiden. Als Farbe wird der Farbeindruck zugrunde gelegt, der durch die Farbtönung und/oder Helligkeit der Farbe bei Beleuchtung des feinteiligen Feststoffes mit elektromagnetischer Strahlung hervorgerufen wird. Es können verschiedene Feststoffe mit unterschiedlicher Zusammensetzung verwendet werden.

Gemäß einem ersten Aspekt der vorliegenden Erfindung werden die vorstehend erläuterten Probleme durch das erfindungsgemäße Verfahren zur Herstellung einer mindestens einen feinteiligen Feststoff enthaltenden Polymerschicht gelöst. Der mindestens eine feinteilige Feststoff ist ausgewählt aus einer Gruppe, bestehend aus Melierfasern, Planchetten, anorganischen feinteiligen Feststoffen in Form von Lumineszenzpigmenten, optisch variablen Farbpigmenten, holographischen Partikeln oder Nanopartikeln und organischen feinteiligen Feststoffen in Form von lumineszierenden Buntpigmenten. Mit diesem Verfahren kann eine Polymerfolie mit mindestens einem darin enthaltenen feinteiligen lumineszierenden und/oder elektromagnetische Strahlung beugenden und/oder brechenden und/oder reflektierenden Feststoff hergestellt werden.

Gemäß einem zweiten Aspekt der vorliegenden Erfindung werden die vorstehend erläuterten Probleme auch durch das erfindungsgemäße Verfahren zur Herstellung eines Folienkörpers gelöst.

Das Verfahren zur Herstellung der Polymerfolie umfasst die folgenden Verfahrensschritte:
a) Bereitstellen des mindestens einen feinteiligen Feststoffes;
b) Bereitstellen einer Flüssigzubereitung, die mindestens einen Stoff, ausgewählt aus einer Gruppe, umfassend Monomere, Präpolymere und Polymere, enthält, die in der Flüssigzubereitung beispielsweise gelöst oder dispergiert sind;
c) Einbringen des mindestens einen feinteiligen Feststoffes in die Flüssigzubereitung und Homogenisieren der Flüssigzubereitung unter Ausbildung eines den mindestens einen feinteiligen Feststoff enthaltenden Vorproduktmaterials;
d) Erzeugen einer Schicht des Vorproduktmaterials, beispielsweise auf einer Unterlage; und
e) Verfestigen des Vorproduktmaterials unter Ausbildung der den mindestens einen feinteiligen Feststoff enthaltenden Polymerfolie und Unterwerfen der Schicht des Vorproduktmaterials einem Pressverfahren zur Oberflächenvergütung.

Somit wird die Polymerschicht mit dem mindestens einen darin enthaltenen feinteiligen Feststoff erhalten.

Das erfindungsgemäße Verfahren zur Herstellung des Folienkörpers umfasst die folgenden Verfahrensschritte:
(A) Herstellen mindestens einer mindestens einen feinteiligen Feststoff enthaltenden Polymerfolie durch Herstellen einer Polymerschicht mit dem erfindungsgemäßen Verfahren zur Herstellung der Polymerschicht, wobei der mindestens eine feinteilige Feststoff ausgewählt ist aus einer Gruppe, bestehend aus Melierfasern, Planchetten, anorganischen feinteiligen Feststoffen in Form von Lumineszenzpigmenten, optisch variablen Farbpigmenten, holographischen Partikeln oder Nanopartikeln und organischen feinteiligen Feststoffen in Form von lumineszierenden Buntpigmenten;
(B) Bereitstellen mindestens einer weiteren Folie;
(C) Zusammentragen der mindestens einen den mindestens einen feinteiligen Feststoff enthaltenden Polymerfolie und der mindestens einen weiteren Folie unter Ausbildung eines Folienstapels; und
(D) Laminieren des Folienstapels unter Ausbildung des Folienkörpers.

Der Folienkörper kann zur Herstellung eines Wert- oder Sicherheitsprodukts dienen oder ein Wert- oder Sicherheitsprodukt darstellen.

Der vorliegenden Erfindung liegt von daher der Gedanke zugrunde, zur Einbringung von feinteiligen Feststoffen in einen Folienkörper diese nicht mehr wie bisher zunächst auf die Oberfläche von den Folienkörper bildenden Polymerfolien aufzubringen, die dann miteinander verbunden werden, sondern durch Einbringen der feinteiligen Feststoffe in eine Polymerschicht, insbesondere in eine Polymerfolie, bereits bei deren Herstellung.

Damit werden die im Zusammenhang mit dem Aufbringen der Feststoffteilchen auf die Polymerfolie stehenden Probleme gelöst, beispielsweise das Problem der Verunreinigung der Produktionsumgebung beim Aufstreuen, das Problem des ungleichmäßigen Auftrages aufgrund der Neigung der Teilchen sich zusammenzuballen und das Problem, dass das Aufstreuen technisch aufwändige Lösungen erfordert.

Durch das Einbringen der Feststoffteilchen in eine Polymerschicht, vorzugsweise in eine Polymerfolie, bereits bei deren Herstellung, wird auf einfache Art und Weise eine sehr gleichmäßige Verteilung im Folienvolumen erreicht. Da die Polymerschicht erfindungsgemäß aus einer Flüssigzubereitung, in die die Teilchen eingebracht worden sind, hergestellt wird, kann die Zubereitung leicht homogenisiert werden, sodass eine sehr gleichmäßige Verteilung erreicht wird. Ferner kann eine Kontamination der Produktionsumgebung beim Verarbeiten der feinteiligen Feststoffteilchen leicht vermieden werden, da allein beim Einbringen der Teilchen in die Flüssigzubereitung die Gefahr der Verunreinigung der Produktionsumgebung besteht. Diese Gefahr kann durch geeignete Maßnahmen leicht ausgeschaltet werden. Da überdies eine Folienherstellung im Allgemeinen von deren Weiterverarbeitung räumlich getrennt ist, kann eine Kontamination bei der Weiterverarbeitung der Folien ohnehin nicht stattfinden. Nachdem sich die Feststoffteilchen in der Flüssigzubereitung befinden, ist das oft beobachtete Ablösen der Teilchen nicht mehr möglich, da sie fest in der Schicht- bzw. Folienmatrix eingebunden sind. Zudem ist es nicht erforderlich, diejenigen technisch anspruchsvollen Lösungen zu realisieren, die für eine wirksame Aufbringung der Teilchen auf die Folien durch Aufstreuen erforderlich sind, nämlich das Ummanteln der Teilchen mit einem Kleber, das antistatische Vorbehandeln der Folienoberfläche und deren nachträgliche Reinigung von nicht oder schlechthaftenden Partikeln. Da die Verwendung eines Klebers zudem den Nachteil hat, dass sich Trenn- oder Alterungseffekte einstellen, besteht auch insofern ein Vorteil der erfindungsgemäßen Verfahren. Ferner ist es durch diese Vorgehensweise auch nicht mehr erforderlich, eine für das Aufstreuen benötigte separate Aufbringungsanlage bereitzustellen, sodass auch der apparative Aufwand gegenüber herkömmlichen Verfahren deutlich vermindert ist. Schließlich besteht ein wesentlicher weiterer Vorteil darin, dass für unterschiedliche Feststoffteilchen problemlos Lösungen zur Verfügung stehen. Mit den herkömmlichen Verfahren sind jeweils angepasste Verfahrensweisen erforderlich.

Damit bietet die Erfindung gegenüber den herkömmlichen Maßnahmen nicht nur eine qualitativ verbesserte, sondern auch vereinfachte Lösung.

Als feinteilige Feststoffe werden die vorgenannten, in ein Polymer einbringbaren Materialien eingesetzt. Die für die Einbringung in die Polymerschicht vorgesehenen Teilchen sind demnach in erster Linie nicht Teilchen, die zur Veränderung der Eigenschaften des Materials einer Polymerschicht oder -folie als solche dienen, also beispielsweise Füllstoffe, die dazu dienen, das Polymermaterial opak und in einer bestimmten Farbe einzufärben oder das Polymermaterial elektrisch leitend zu machen, etwa um es antistatisch zu machen, beispielsweise Ruß. Vielmehr handelt es sich um Materialien, die spezielle optische Eigenschaften aufweisen und die insbesondere optisch aktiv sind. Derartige Materialien werden zur Bildung von Sicherheitsmerkmalen von Wert- oder Sicherheitsdokumenten eingesetzt. Vorzugsweise handelt es sich um lumineszierende und/oder elektromagnetische Strahlung beugende und/oder brechende und/oder reflektierende Teilchen.

In einer bevorzugten Ausführungsform der vorliegenden Erfindung liegt der mindestens eine feinteilige Feststoff in Form von Melierfasern vor. Derartige Fasern sind gut bekannt. Sie sind typischerweise aus einem Polymer gebildet und weisen die eingangs angegebenen Abmessungen auf. Das Polymer kann eines von denjenigen Polymeren sein, die auch für die Polymerfolien und ein daraus herzustellendes Wert- oder Sicherheitsprodukt Verwendung finden.

Alternativ können für die feinteiligen Feststoffe auch die vorgenannten organischen Materialien oder anorganischen Materialien eingesetzt werden. Es sind natürlich auch Mischungen möglich, beispielsweise als Verbundstoffe. Anorganische Materialien sind Lumineszenzpigmente, beispielsweise Metalleffektpigmente, lumineszierende Wirtsgitterverbindungen, wie Yttriumsilikate, Zinksulfide, Gadoliniumoxide, die Seltenerdelemente als Luminophore enthalten, ferner optisch variable Farbpigmente (OVI, OVD), holographische Partikel, Nanopartikel, beispielsweise halbleitende Nanopartikel, und andere Taggants. Der visuell wahrnehmbare Farbeindruck im Falle von OVI, OVD wird durch Interferenzschichten in dem Material erzeugt. Der Farbeindruck variiert mit dem Betrachtungswinkel, unter dem eine mittels dieser Farbpartikel hergestellte Farbschicht betrachtet wird. Beispielsweise handelt es sich um Glimmerplättchen, die dünn mit Metalloxid, beispielsweise Titandioxid (TiO₂) oder Eisen(III)-oxid (Fe₂O₃), (beispielsweise Iriodin®, Merck), beschichtet sind. Falls diese Plättchen räumlich ausgerichtet werden, beispielsweise beim Herstellen der Polymerfolie oder insbesondere beim uniaxialen oder biaxialen Verstrecken einer Polymerfolie, ergibt sich der vom Betrachtungswinkel abhängige Farbeindruck. Die organischen Materialien sind lumineszierende Buntpigmente, wie Azo-, Benzimidazolon-, Indanthron- und andere lumineszierende Pigmente. Das Emissionsmaximum von lumineszierenden Nanopartikeln hängt von deren Größe ab. Die Lumineszenz dieser Partikel ist besonders ausgeprägt.

Es ist bevorzugt, dass die feinteiligen Feststoffe lumineszierend sind. Beispielsweise können sie im sichtbaren Spektralbereich lumineszieren. Grundsätzlich können sie aber auch im IR- oder UV-Bereich lumineszieren. Zur Anregung der Lumineszenz kommt vorzugsweise elektromagnetische Strahlung im UV-Bereich in Betracht. Grundsätzlich ist es aber auch möglich, dass elektromagnetische Strahlung im IR- oder sichtbaren Spektralbereich zur Anregung der Lumineszenz eingesetzt wird. Für die Erzeugung der Lumineszenz können die Feststoffe mindestens eines von allen üblichen organischen und anorganischen Lumineszenzmitteln enthalten.

Die Polymerschicht wird aus einer Flüssigzubereitung hergestellt, in die die feinteiligen Feststoffe eingebracht werden und die homogenisiert wird, sodass die Feststoffe darin in gleichmäßiger Verteilung vorliegen und das Vorproduktmaterial bilden. Durch bestimmte Zusatzstoffe, beispielsweise oberflächenaktive Stoffe, oder durch Mittel, die die Viskosität der Flüssigzubereitung erhöhen, beispielsweise höher molekulare Anteile der Matrix (Bindemittel), kann die Stabilität der Dispersion des Feststoffes in der Flüssigkeit erhöht werden.

Die Flüssigzubereitung kann insbesondere eine Lösung eines Polymers in einem hierfür geeigneten Lösungsmittel sein. Alternativ kann die Flüssigzubereitung auch durch eine Mischung von Monomeren und/oder Präpolymeren des zu bildenden Polymers und gegebenenfalls weiteren Stoffen, wie Lösungsmitteln und Radikalstartern gebildet sein. Beispielsweise kann die Flüssigzubereitung durch einen herkömmlichen Lack gebildet sein. Beispielsweise kann dieser Lack der auf die Oberflächen eines Wert- oder Sicherheitsdokuments typischerweise außenseitig aufgebrachte Schutzlack sein, der das Dokument gegen Abrieb und Beschädigungen schützt.

In einer bevorzugten Ausführungsform der vorliegenden Erfindung ist die Polymerschicht aus Polycarbonat (PC) oder Polyethylenterephthalat (PET) gebildet. Hierzu ist in der Flüssigzubereitung und damit in dem Vorproduktmaterial entweder ein entsprechendes gelöstes oder dispergiertes Polymer vorzusehen, und/oder die Monomere und/oder Präpolymere, die sich in der Flüssigzubereitung befinden, sind entsprechend auszuwählen.

Das Material der Flüssigzubereitung und somit das Vorproduktmaterial sowie das daraus durch Trocknung und/oder Aushärtung gebildete Polymerschichtmaterial können insbesondere transparent oder transluzent sein, damit die darin enthaltenen Feststoffteilchen für einen Betrachter sichtbar sind. Falls lediglich eine apparative Erfassung des mit den Teilchen erzielbaren optischen Effektes in einem anderen als dem sichtbaren Spektralbereich vorgesehen ist, sind die Flüssigzubereitung und das daraus gebildete Polymerschichtmaterial in dem entsprechenden Spektralbereich transparent oder transluzent auszubilden. Falls die gebildete Polymerschicht sehr dünn ist, kann sie gegebenenfalls auch opak sein, ohne dass die Detektion dadurch wesentlich beeinträchtigt wird.

Zum Vermischen der feinteiligen Feststoffe mit der Flüssigzubereitung können erstere zunächst in Form eines konzentrierten flüssigen Vorgemisches (Masterbatch) vorliegen. Dieses Vorgemisch wird dann in die Flüssigzubereitung gegeben. Die feinteiligen Feststoffe können bereits in dem Vorgemisch homogenisiert, das heißt in einer gleichmäßigen Verteilung, enthalten sein. Jedenfalls sind die Feststoffteilchen in der Flüssigzubereitung sehr gleichmäßig zu verteilen, beispielsweise mittels eines mechanischen Homogenisierungsverfahrens, wie Rühren. Alternativ kann auch Energie in Form von Ultraschall in die Flüssigzubereitung eingebracht werden, um eine Homogenisierung zu erzielen.

In einer bevorzugten Ausführungsform der vorliegenden Erfindung wird das derart hergestellte Vorproduktmaterial dann in eine schichtartige Form, beispielsweise auf einer Unterlage, überführt, beispielsweise durch Aufgießen des Vorproduktmaterials auf die Unterlage. Dabei bildet sich eine sehr dünne Schicht, die je nach den Verfahrensbedingungen und der Konzentration der Bestandteile in dem Vorproduktmaterial eine Schichtdicke von 1 µm bis zu 1000 µm, bevorzugt 5 µm bis zu 500 µm, haben kann.

In einer weiteren bevorzugten Ausführungsform der vorliegenden Erfindung kann die Unterlage beispielsweise ein Träger sein, von dem die Polymerschicht nach Verfahrensschritt (e) wieder abnehmbar, insbesondere abziehbar, ist. Der Träger ist vorzugsweise derart beschaffen, dass die Polymerschicht nach dem Verfestigen von dieser in Form einer Polymerfolie leicht ablösbar ist. Als Trägermaterialien kommen daher solche in Betracht, die sich mit dem Material des Vorproduktes nicht verbinden. Beispielsweise kann der Träger aus einem Edelstahlmaterial gebildet sein. Damit die zu bildende Folie eine möglichst hohe Oberflächengüte aufweist, ist die Oberfläche des Trägers mit einer ebenso hohen Oberflächengüte auszustatten. Daher kann der Träger beispielsweise hochglanzpoliert sein, wenn die Folie eine hochglänzende Oberfläche aufweisen soll. Grundsätzlich kommt zur Herstellung von mattierten Folienoberflächen auch eine mattierte Trägeroberfläche in Betracht.

In einer alternativen Erfindungsvariante kann die Unterlage auch durch eine bereits selbsttragende Polymerfolienunterlage, beispielsweise ein im Wesentlichen bereits hergestelltes Wert- oder Sicherheitsprodukt, gebildet sein, auf die das Vorproduktmaterial aufgebracht wird. Anders als im Falle eines Trägers, von dem das verfestigte Vorproduktmaterial wieder abnehmbar ist, muss die Polymerfolienunterlage nicht notwendigerweise eine hohe Oberflächengüte aufweisen. Denn das aufgebrachte Vorproduktmaterial verbindet sich in diesem Falle fest mit der Polymerfolienunterlage, sodass sich möglichst keine Grenzfläche zwischen der Unterlage und dem Vorproduktmaterial ausbildet. Das auf der Polymerfolienunterlage verfestigte Vorproduktmaterial wird dann nicht mehr von der Polymerfolienunterlage abgenommen sondern verbindet sich fest mit dieser. Beispielsweise kann sich eine monolithische Verbindung, d.h. Verbindung ohne Grenzfläche, ausbilden, wenn ein in dem Vorproduktmaterial enthaltenes Lösungsmittel die Polymerfolienunterlage anzulösen vermag.

Um eine Polymerfolie in Form eines Bandes herzustellen, kann der Träger beispielsweise in Form eines umlaufenden Bandes ausgebildet sein. Diese Verfahrensweise ermöglicht eine kontinuierliche Herstellung einer Polymerfolie. Das flüssige Vorproduktmaterial wird in diesem Falle an einem Ende des umlaufenden Trägerbandes auf dessen Oberfläche aufgetragen, dann mit einer fortschreitenden Bewegung des Trägerbandes zum anderen Bandende befördert, wobei die Verfestigung auf diesem Wege stattfindet, und dann am Bandende vom Trägerband als selbsttragende Polymerfolie abgehoben. Auch im Falle des Aufbringens des Vorproduktmaterials auf eine Polymerfolienunterlage kann diese ebenso wie das Trägerband in Form eines umlaufenden Bandes ausgebildet sein, sodass beim Beschichten ein Folienband hergestellt wird. Beispielsweise kann die Polymerfolienunterlage in einem Reel-to-reel-Verfahren von einer ersten Vorratsrolle abgerollt und auf eine zweite Vorratsrolle wieder aufgerollt werden.

Alternativ kann das Vorproduktmaterial auch diskontinuierlich auf einen stationären Träger oder eine stationäre Polymerfolienunterlage aufgebracht werden, sodass ein Polymerfolienbogen gebildet wird.

Für das Auftragen des Vorproduktmaterials auf die Unterlage kommt jedes beliebige Auftragsverfahren für Flüssigkeiten in Betracht, beispielsweise ein Gießverfahren, insbesondere Vorhanggießverfahren, ferner Dispenserverfahren, Druckverfahren, Kalandrierverfahren, Rollenbeschichtungsverfahren oder dergleichen. In einer bevorzugten Ausführungsform der vorliegenden Erfindung wird das Vorproduktmaterial mit einem Gießverfahren auf eine Unterlage aufgebracht.

Insbesondere wenn Feststoffteilchen eingesetzt werden, die in einer oder zwei Raumdimensionen wesentlich größere Abmessungen als in einer zweiten und dritten bzw. nur in einer zweiten Raumdimension haben, und wenn das derartige Feststoffteilchen enthaltende Vorproduktmaterial in einem kontinuierlichen Gießverfahren auf eine bandförmige in Translationsrichtung bewegte Unterlage aufgegossen wird, sodass sich beim Auftragen eine Vorzugsströmungsrichtung ergibt, stellen sich gegebenenfalls vorteilhafte optische Effekte in der erfindungsgemäßen Polymerschicht dadurch ein, dass sich die Feststoffteilchen in der gegossenen Schicht zueinander ausrichten, nämlich vorzugsweise entlang der Translationsrichtung. Dieser Effekt stellt sich beispielsweise im Falle von faser- oder plättchenförmigen Feststoffteilchen ein. Auch beim Halten einer noch flüssigen Schicht findet aufgrund der Gravitation eine Ausrichtung der Feststoffteilchen zueinander statt.

In einer weiteren bevorzugten Ausführungsform der vorliegenden Erfindung wird die Schicht des Vorproduktmaterials auf der Unterlage in mindestens einem räumlich begrenzten ersten Polymerschichtbereich erzeugt. Alternativ wird die Schicht ganzflächig auf der Unterlage erzeugt.

Insbesondere dann, wenn das Vorproduktmaterial in einem kontinuierlichen Verfahren zur Herstellung der erfindungsgemäßen Polymerfolie auf ein bandförmig ausgebildetes und sich in einer Translationsrichtung bewegendes Band aufgebracht wird, sodass es beim Auftragen fortwährend oder intermittierend voranschreitend bewegt wird, kann der mindestens eine räumlich begrenzte Schichtbereich auf der Unterlage in einer ersten vorteilhaften Weiterbildung dieser bevorzugten Ausführungsform in Form eines ununterbrochenen sich entlang der Translationsrichtung erstreckenden Bereiches ausgebildet werden, nämlich in Form von sich entlang der Translationsrichtung erstreckenden Streifen (Bahnen). Auf diese Weise kann ein einzelner oder können mehrere Streifen gebildet werden, die aufgrund dieser Herstellungsweise parallel zueinander verlaufen. Zur Herstellung derartiger Streifen kann ein Spender, beispielsweise Gießspender, oder können mehrere quer zur Translationsrichtung der Unterlage angeordnete Spender vorgesehen sein. Falls sich die Unterlage nicht bewegt, kann/können auch der/die Spender über die Unterlage bewegt werden, um die Streifen zu bilden.

In einer anderen (zweiten) vorteilhaften Weiterbildung dieser bevorzugten Ausführungsform können unabhängig von einer Translation der Unterlage alternativ oder zusätzlich auch Polymerschichtbereiche gebildet werden, beispielsweise in Form von Mustern, insbesondere geometrischen Flächenmustern, ferner Rastern oder dergleichen. Beispielsweise kann ein Muster in Form eines Wappens, Symbols, Logos oder eines noch anderen Musters gebildet werden. Hierzu können beispielsweise Blenden mit den Mustern entsprechenden Öffnungen verwendet werden, durch die das Vorproduktmaterial auf die Unterlage aufgebracht wird. Beispielsweise kann das Vorproduktmaterial in einem Siebdruckverfahren durch die Öffnungen des Siebes auf die Unterlage aufgebracht werden. Eine derartige Ausbildung eines flächenmäßig begrenzten und daher die Unterlage nicht vollständig ausfüllenden Bereiches - oder von mehreren derartigen Bereichen - kann insbesondere dann realisiert werden, wenn die erfindungsgemäß hergestellte Polymerfolie in einem diskontinuierlichen Verfahren als Bogenmaterial auf einer stationären Unterlage erzeugt wird. Falls die Schicht in einem kontinuierlichen Verfahren hergestellt wird, eignet sich ein Rollensiebdruckverfahren zur Bildung derartiger Polymerschichtbereiche.

Grundsätzlich ist aber eine Bildung von derartigen Polymerschichtbereichen in Form translationsunabhängiger Muster auch dann möglich, wenn die erfindungsgemäß hergestellte Polymerschicht in einem kontinuierlichen Verfahren hergestellt wird, indem die Muster auf einer in Translationsrichtung bewegten Unterlage gebildet werden. Gleichermaßen ist die Bildung von Streifen selbstverständlich auch dann möglich, wenn die erfindungsgemäß hergestellte Polymerschicht in einem diskontinuierlichen Verfahren hergestellt wird.

In noch einer weiteren Ausführungsform der vorliegenden Erfindung können mehrere nicht ganzflächige Bereiche auf der Unterlage gebildet werden, d.h. die Schicht des Vorproduktmaterials ist durch mindestens zwei Schichtbereiche gebildet, die mit unterschiedlichen Vorproduktmaterialien gebildet werden. Beispielsweise können sich die Vorproduktmaterialien durch die darin enthaltenen feinteiligen Feststoffe voneinander unterscheiden. Zum Beispiel kann ein erstes Vorproduktmaterial einen ersten lumineszierenden Feststoff enthalten, der unter UV-Bestrahlung grün luminesziert, und ein zweites Vorproduktmaterial einen zweiten lumineszierenden Feststoff, der unter UV-Bestrahlung rot luminesziert. Oder der erste Feststoff luminesziert und der zweite Feststoff hat lichtbeugende und/oder lichtbrechende und/oder reflektierende Eigenschaften. Zudem können die ersten Bereiche mit dem ersten Feststoff und die zweiten Bereiche mit dem zweiten Feststoff einander ergänzende Muster bilden, sodass alle Bereiche, in denen Vorproduktmaterial aufgebracht wird, die Unterlage ganzflächig bedecken. Entsprechend können auch drei, vier, fünf oder noch mehr Bereiche mit entsprechenden und sich voneinander unterscheidenden feinteiligen Feststoffen gebildet werden.

In noch einer weiteren Ausführungsform der vorliegenden Erfindung können auch mehrere aneinander angrenzende Polymerschichtbereiche gebildet werden, die mit zwei verschiedenen Vorprodukten erzeugt werden. Das erste Vorprodukt enthält beispielsweise mindestens einen ersten feinteiligen Feststoff, der eine erste mit dem Auge wahrnehmbare Farbe aufweist, entweder direkt durch Absorption und Remission oder aufgrund von Lumineszenz im sichtbaren Spektralbereich, und das zweite Vorprodukt enthält beispielsweise mindestens einen zweiten feinteiligen Feststoff, der eine zweite mit dem Auge wahrnehmbare Farbe aufweist, entweder wiederum direkt durch Absorption und Remission oder aufgrund von Lumineszenz im sichtbaren Spektralbereich. Im Grenzbereich zwischen den beiden Polymerschichtbereichen (Mischbereich) kommt es zu einer Vermischung des ersten und des zweiten Vorproduktes, sodass sich dort spezielle Farbeffekte ergeben. Auf diese Weise kann ein Iris-Effekt, beispielsweise ein Melierfaser-Iris-Effekt, geschaffen werden.

In noch einer weiteren Ausführungsform der vorliegenden Erfindung können beispielsweise ein Vorproduktmaterial mit mindestens einem feinteiligen Feststoff in mindestens einem ersten Bereich und eine Flüssigzubereitung ohne darin enthaltenen feinteiligen Feststoff in mindestens einem zweiten Bereich auf die Unterlage aufgebracht werden. In einer besonders vorteilhaften Ausgestaltung dieser Weiterbildung können die ersten und die zweiten Bereiche die Unterlage ganzflächig bedecken, sodass eine einheitliche Polymerlage gebildet wird. Entsprechend können dann natürlich auch mehrere Bereiche mit unterschiedlichen Vorproduktmaterialien und ein Bereich mit einer Flüssigzubereitung ohne Feststoffe gebildet werden.

Zur Ausbildung der erfindungsgemäßen Polymerschicht wird das schichtartig ausgebildete Vorproduktmaterial verfestigt (Verfahrensschritt (e)). Dies kann durch Verdampfen eines darin enthaltenen Lösungsmittels und/oder durch Polymerisation (falls mit Strahlungs- (UV) vernetzenden Formulierungen gearbeitet wird) von darin enthaltenen Monomeren und/oder Präpolymeren verwirklicht werden. Hierzu kann die Vorproduktmaterialschicht beispielsweise erwärmt und/oder elektromagnetischer Strahlung in hierfür geeigneten Wellenlängenbereichen ausgesetzt werden. Dabei trocknet die Schicht, und/oder sie härtet dann aus. In noch einer weiteren Variante kann die Härtung auch durch Abkühlen erreicht werden, wenn das Vorproduktmaterial bei erhöhter Temperatur in Form einer Schmelze vorliegt und sich bei Raumtemperatur verfestigt.

Die Flüssigzubereitung kann durch eine Lösung oder Dispersion eines Polymers in einer Flüssigkeit oder durch eine Mischung von Präpolymeren und/oder von Monomeren, die zum Polymer zu polymerisieren sind, beispielsweise mit einem Lösungsmittel oder Dispersionsmittel gebildet sein. Ein in dem Vorproduktmaterial enthaltenes Lösungsmittel verdampft beim Verfestigen der Schicht, sodass ein darin enthaltenes Polymer eine zusammenhängende Schicht bildet. Alternativ oder zusätzlich polymerisieren die Präpolymere und/oder die Monomere, sodass sich die Polymerfolie bildet. In allen diesen Fällen kann die Flüssigzubereitung außerdem weitere Stoffe enthalten, die eine Polymerisation vorantreiben und/oder die für eine Polymerisation unerlässlich sind, beispielsweise Radikalstarter, Säuren, Basen und dergleichen.

Durch die Verfestigung wird die erfindungsgemäße Polymerschicht gebildet. Entweder wird eine freitragende Polymerfolie ausschließlich aus der Polymerschicht aus dem Vorproduktmaterial oder aus einer Polymerfolienunterlage und der darauf gebildeten Polymerschicht aus dem Vorproduktmaterial gebildet. Die Dicke der Polymerschicht kann im Bereich von 5 µm bis 500 µm, vorzugsweise von 5 µm bis 250 µm, noch weiter bevorzugt von 50 µm bis 100 µm liegen. Desgleichen kann die Dicke der Polymerfolie im Bereich von 5 µm bis 500 µm, vorzugsweise von 5 µm bis 250 µm, noch weiter bevorzugt von 50 µm bis 100 µm liegen. Insbesondere kann die Foliendicke 50 µm bis 75 µm betragen. Falls die Polymerschicht nach deren Bildung auf einem Träger von diesem abgenommen wird, hat die derart gebildete Polymerfolie ebenfalls diese Dicke.

Die feinteiligen Feststoffe liegen in der erfindungsgemäßen Polymerschicht in einer ungeordneten Verteilung vor. Die Verteilung ist zufällig. Die Dichte der Feststoffe in der Polymerschicht hängt von der Menge der Feststoffteilchen ab, die der Flüssigzubereitung zugegeben worden sind. Vorausgesetzt, dass die Homogenisierung des Vorproduktmaterials wirksam durchgeführt werden konnte, sind die Feststoffteilchen in der Polymerschicht auch gleichmäßig verteilt. Die Teilchen verteilen sich auf das gesamte Volumen der Polymerschicht.

Erfindungsgemäß wird das in Form der Schicht ausgebildete Vorproduktmaterial während Verfahrensschritt (e) einem Pressverfahren zur Oberflächenvergütung unterworfen. Dies kann dann vorteilhaft sein, wenn die Oberflächen der Polymerschicht durch den Trocknungs- und/oder Aushärtungsschritt nicht die gewünschte Oberflächengüte aufweisen. Insbesondere können sich an den Oberflächen befindende Anteile der feinteiligen Feststoffe durch die Oberfläche teilweise nach außen hindurchtreten. Durch das Pressverfahren werden diese Feststoffteilchen in die Oberfläche hineingedrückt. Hierzu kann das Pressverfahren beispielsweise mittels mindestens eines einen Spalt bildenden Walzenpaares mit Druck- und Gegendruckwalze ausgeführt werden. Die Oberflächen der Presswerkzeuge, insbesondere die der Walzen, sollen hierzu ebenfalls eine hohe Oberflächengüte aufweisen, beispielsweise hochglanzpoliert sein. Das Pressverfahren wird vorzugsweise durchgeführt, während das Verfestigungsverfahren noch andauert, sodass eine mechanische Einebnung der Oberflächen noch möglich ist. Im Bereich der Oberflächen fließt das Vorproduktmaterial durch den Pressvorgang und ebnet sich dadurch ein. Durch das Pressverfahren ist es auch möglich, die Foliendicke mittels des Pressverfahrens einzustellen. Hierzu ist der Spalt zwischen der Druck- und der Gegendruckwalze auf eine bestimmte Breite einzustellen.

Das Wert- oder Sicherheitsprodukt wird vorzugsweise aus mindestens einer Polymerfolie, die nach dem erfindungsgemäßen Verfahren hergestellt ist, indem zunächst die Polymerschicht auf einem Träger erzeugt wird und diese dann von dem Träger abgenommen wird oder indem sie auf einer Polymerfolienunterlage erzeugt wird, sowie gegebenenfalls aus weiteren Folien, insbesondere Polymerfolien, und gegebenenfalls außenseitigen Schutzlackierungen oder Schutzfolien hergestellt. Die Schutzlackierungen oder Schutzfolien dienen zum außenseitigen Schutz gegen Beschädigungen (Verkratzungen) und zum Einschließen von ansonsten außenseitig angebrachten Sicherheitsmerkmalen in das Innere des Produkts, um vor Manipulationen zu schützen. Ferner kann außenseitig auch eine diffraktive Folie angebracht werden. Jede der Polymerfolien kann transparent oder transluzent oder opak sein. Damit die feinteiligen Feststoffe in dem Folienkörper von außen optisch wahrnehmbar oder erfassbar sind, sind die zwischen der Polymerschicht, die die Feststoffteilchen enthält, und einem Betrachter oder einer Verifikationsvorrichtung liegenden weiteren Polymerfolien und/oder -schichten in dem Spektralbereich transparent oder transluzent, der zur Wahrnehmung oder Erfassung der Feststoffteilchen dient. Die dahinter liegenden Polymerfolien und/oder -schichten können zwar auch transparent oder transluzent sein. Sie können aber auch opak sein.

Das Wert- oder Sicherheitsprodukt kann aus den Dokumentenmaterialien insbesondere durch Lamination hergestellt werden. Zusätzlich zu den Polymerlagen beispielsweise aus PC oder PET kann das Produkt auch weitere Lagen aus anderen Materialien enthalten, beispielsweise aus anderen Polymeren oder aus Papier oder Pappe. Typischerweise wird die Lamination von PC in einer Heiß/Kalt-Laminierpresse in einem ersten Schritt bei 170 bis 200 °C und einem Druck von 50 bis 600 N/cm² und in einem zweiten Schritt bei Kühlung etwa auf Raumtemperatur und unter demselben Druck hergestellt. Die Lamination von PET findet bei einer höheren Temperatur statt, beispielsweise bei 220 °C.

Alternativ oder zusätzlich zu der Polymerfolie innerhalb des zur Lamination vorgesehenen Folienstapels für die Bildung des Folienkörpers kann der laminierte Folienkörper nachträglich außen einseitig oder beidseitig mit einer Schutzlackierung versehen werden. Dieser Schutzlack kann das erfindungsgemäß eingesetzte Vorproduktmaterial sein, das die feinteiligen Feststoffe enthält. Beispielsweise kann diese außenseitige Polymerschicht durch mehrere Schichtbereiche gebildet sein, von denen einer oder einige durch jeweils ein Vorproduktmaterial mit darin enthaltenen Feststoffteilchen und andere durch einen Schutzlack ohne Feststoffteilchen gebildet sind.

Das Wert- oder Sicherheitsprodukt kann zusätzlich zu einem durch die feinteiligen Feststoffe gebildeten Sicherheitsmerkmal in der Polymerschicht mindestens ein weiteres Sicherheitsmerkmal aufweisen, das entweder individualisierend oder nicht individualisierend ist. Als weitere Sicherheitsmerkmale kommen Guillochen, Wasserzeichen, Prägedrucke, ein Sicherheitsfaden, Mikroschrift, Kippbilder, Hologramme, optisch variable Pigmente, lumineszierende Farben, Durchlichtpasser und dergleichen in Betracht. Ferner kann das Dokument auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Dokuments versteckt angeordnet sein.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung haben. Es zeigen im Einzelnen:
- Fig. 1A: zeigt eine erfindungsgemäß hergestellte Polymerschicht oder Polymerfolie mit darin enthaltenen Feststoffteilchen (Melierfasern) in einer ersten Ausführungsform in einer schematischen Draufsicht;
- Fig. 1B: zeigt eine erfindungsgemäß hergestellte Polymerschicht mit darin enthaltenen Feststoffteilchen in einer zweiten Ausführungsform in einer schematischen Draufsicht;
- Fig. 2: zeigt das erfindungsgemäße Verfahren zur Herstellung einer mindestens einen feinteiligen Feststoff enthaltenden Polymerschicht in einer schematischen Darstellung in der Seitenansicht;
- Fig. 3: zeigt eine Vorrichtung zum Aufbringen des Vorproduktmaterials auf eine bandförmige Polymerfolienunterlage in einer ersten Ausführungsform zum kontinuierlichen Beschichten in einer schematischen isometrischen Ansicht;
- Fig. 4: zeigt eine Vorrichtung zum Aufbringen des Vorproduktmaterials auf eine bandförmige Polymerfolienunterlage in einer zweiten Ausführungsform zum kontinuierlichen Beschichten in einer schematischen isometrischen Ansicht;
- Fig. 5: zeigt eine erfindungsgemäß hergestellte Polymerschicht auf einem Träger in einer ersten Ausführungsform in einer schematischen Seitenansicht;
- Fig. 6: zeigt einen Folienkörper in einer ersten Ausführungsform in einer schematischen Seitenansicht, der nach dem erfindungsgemäßen Verfahren hergestellt ist;
- Fig. 7: zeigt einen Folienkörper in einer zweiten Ausführungsform in einer schematischen Seitenansicht, der nach dem erfindungsgemäßen Verfahren hergestellt ist.
- Fig. 8: zeigt eine Vorrichtung zum Anwenden einer Oberflächenpressung zur Verbesserung der Oberflächengüte in einer schematischen Seitenansicht;
- Fig. 9: zeigt das erfindungsgemäße Verfahren zur Herstellung eines Folienkörpers in einer schematischen Darstellung in der Seitenansicht.

In den Figuren bezeichnen gleiche Bezugszeichen dieselben Elemente oder Elemente mit denselben Funktionen.

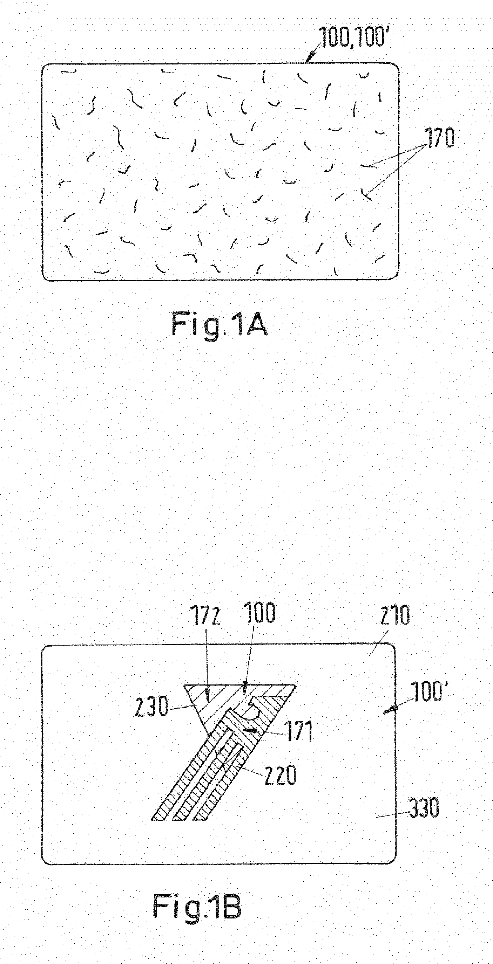

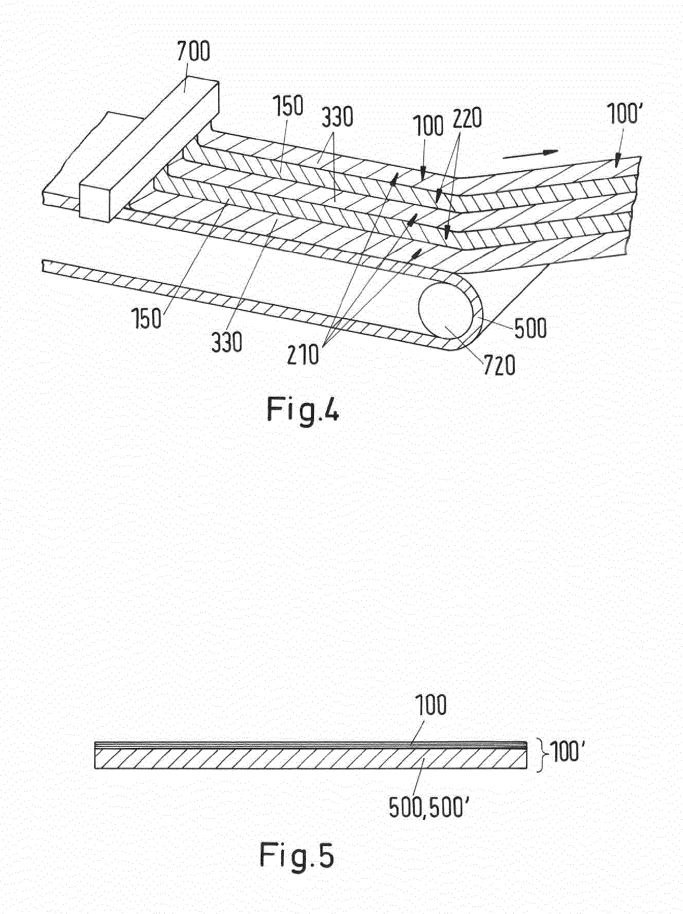

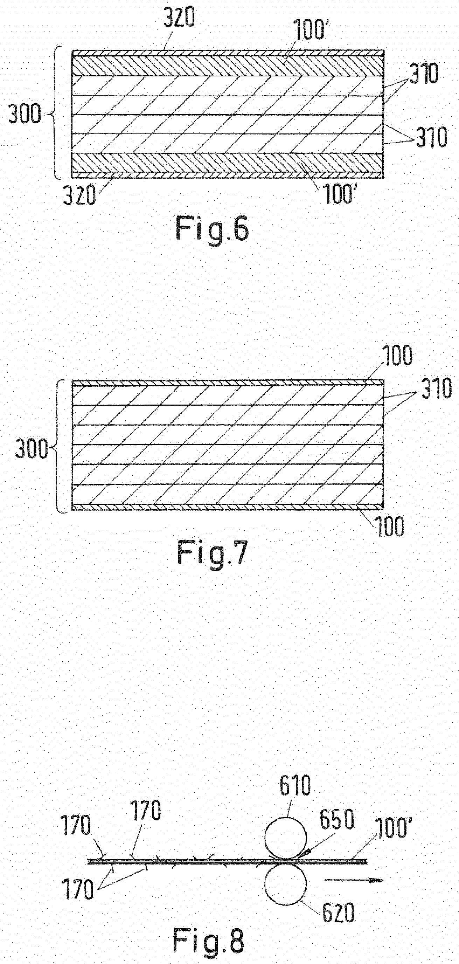

In Fig. 1A, 1B, 5 sind erfindungsgemäße Polymerschichten 100, jeweils auf einem Träger 500 oder in Form einer Polymerfolie 100', in der Draufsicht (Fig. 1A, 1B) und in einer Seitenansicht (Fig. 5) gezeigt. In Fig. 6 ist ein erfindungsgemäßer Folienkörper 300 in einer ersten Ausführungsform, der unter Verwendung von zwei erfindungsgemäß gebildeten Polymerfolien 100' hergestellt ist, und in Fig. 7 in einer zweiten Ausführungsform mit beidseitig aufgebrachten erfindungsgemäß hergestellten Polymerschichten 100 gezeigt.

Die Polymerschichten 100 sind beispielsweise aus einem Lack 150 hergestellt, der aus einer Flüssigzubereitung 130 hergestellt ist, die aus einem Lösungsmittel mit darin enthaltenen Polymerteilchen beispielsweise aus PC oder Präpolymeren beispielsweise zur Bildung von PC gebildet ist. Die Polymerschichten 100 enthalten jeweils ganzflächig (Fig. 1A, 5) darin eingebrachte Feststoffteilchen 170, beispielsweise Melierfasern, oder nur bereichsweise (Fig.1B) darin eingebrachte Feststoffteilchen, beispielsweise Melierfasern (in Fig. 1B sind die einzelnen Feststoffteilchen nicht separat gezeigt). Die Melierfasern sind beispielsweise aus einem Filament mit einer Querschnittsdicke von 25 µm geschnittene kurze (zum Beispiel 5 mm lange) Fasern, die einen lumineszierenden Farbstoff enthalten, beispielsweise ein Pigment, das aus einem mit Eu dotierten Oxysulfid besteht und das unter Bestrahlung mit Anregungslicht, hier UV-Licht, rot luminesziert. Im Falle der Ausführungsform von Fig. 1B ist die Polymerschicht durch drei Polymerschichtbereiche 210, 220, 230 gebildet, von denen zwei erste Polymerschichtbereiche 220, 230 erste Melierfasern 171 bzw. zweite Melierfasern 172 enthalten (Fasern nicht separat gezeigt), die unterschiedliche lumineszierende Farbstoffe enthalten. Beispielsweise enthalten die ersten Melierfasern 171 einen ersten Farbstoff in Form eines Pigments, das aus dem mit Eu dotierten Oxysulfid besteht. Die zweiten Melierfasern 172 enthalten einen zweiten Farbstoff, der beispielsweise durch ein Pigment gebildet ist, das aus einem mit Tb dotierten Oxysulfid besteht und das unter Bestrahlung mit Anregungslicht, hier UV-Licht, grün luminesziert. Anstelle von Melierfasern 170 können grundsätzlich auch andere Feststoffteilchen eingelagert werden, beispielsweise OVI-Plättchen. Der zweite Polymerschichtbereich 210 ist durch einen herkömmlichen Lack gebildet, der keine Feststoffteilchen enthält. Die Lackbasis aller Lacke kann jeweils so gewählt sein, dass die damit gebildeten Lacke die für einen Schutzlack erforderliche Festigkeit gegen Abrieb und andere mechanische Beschädigungen aufweist. Die mit den feinteiligen Feststoffen versehene Polymerfolie 100' muss nicht notwendigerweise im Außenbereich eines Kartenkörpers liegen, sondern kann sich auch in jeder beliebigen Innenlage des Kartenaufbaus befinden. Selbstverständlich können auch zwei oder noch mehr derartige Folien mit feinteiligen Feststoffen in den Kartenkörper integriert werden. Falls die mit den feinteiligen Feststoffen versehenen Polymerfolien im Karteninneren liegen, werden, falls vorhanden, herausstehende Teilchenbereiche, beispielsweise Faserenden von Melierfasern, durch die Lamination in den Kartenaufbau fest eingebunden.

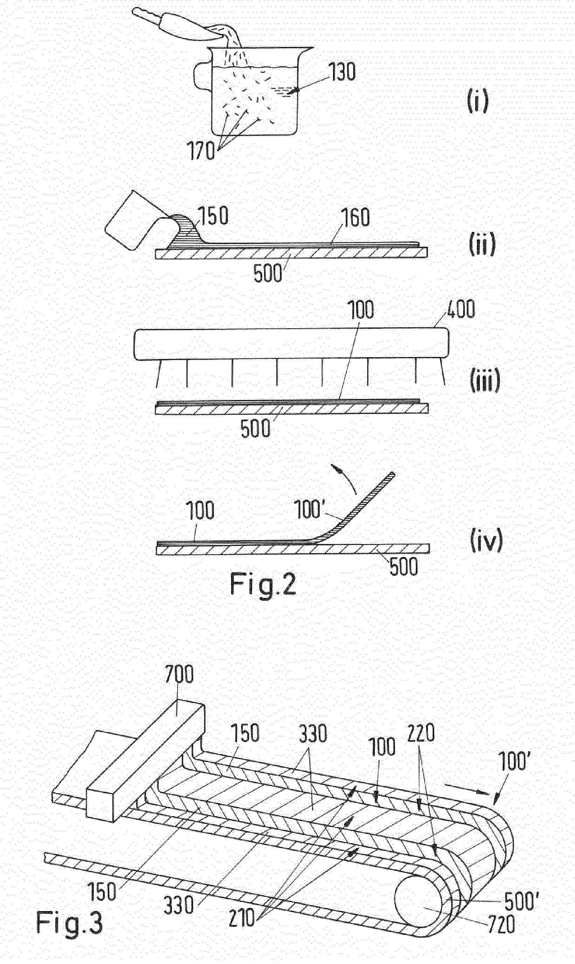

In dem ersten Ausführungsbeispiel gemäß Fig. 1A kann die Polymerschicht 100 zunächst auf einem Edelstahlträger 500 gebildet und dann von diesem wieder abgezogen worden sein, sodass eine Polymerfolie 100' entstanden ist. In diesem Falle würde Fig. 1A eine freitragende Polymerfolie 100' wiedergeben, die von einem Träger 500 bereits abgezogen ist. Alternativ kann diese Darstellung auch eine Polymerfolie 100' darstellen, die durch Bilden der Polymerschicht 100 auf einer Polymerfolienunterlage 500' gebildet worden ist und zusammen mit dieser die Polymerfolie 100' bildet (Fig. 3, 5). Nochmals alternativ dazu kann die Darstellung auch die Polymerschicht 100 wiedergeben, solange sie sich noch auf dem Edelstahlträger 500 befindet (Fig. 3, 4, 5). Das Format der Folie 100' kann beispielsweise einem Bogen entsprechen, der zur Bildung von Laminaten für eine Identitätskartenherstellung mit dem Format ID 1 vorgesehen ist. Die Dicke der Polymerfolie 100' kann beispielsweise 75 µm betragen.

Fig. 5 zeigt eine erfindungsgemäße Polymerschicht 100 auf einem Edelstahlträger 500 vor dem Abziehen oder eine erfindungsgemäße Polymerschicht 100 auf einer Polymerfolienunterlage 500'. Die Dicke der Polymerschicht 100 kann beispielsweise 50 bis 100 µm betragen.

Fig. 1B zeigt eine Polymerfolie 100' aus PC, auf der eine Polymerschicht 100 mit mehreren Schichtbereichen 210, 220, 230 in Form eines Logos gebildet ist. In einem äußeren (zweiten) Polymerschichtbereich 210 ist ein herkömmlicher Lack 330 aufgebracht, der dort eine Lackschicht bildet, die nicht erfindungsgemäß hergestellt ist, da sie keinen feinteiligen Feststoff enthält. Im Bereich des Logos sind zwei (erste) Polymerschichtbereiche 220, 230 gebildet, in denen sich Polymerschichten mit unterschiedlichen Feststoffteilchen 171, 172 befinden. Wie oben angegeben, handelt es sich um erste Melierfasern und zweite Melierfasern, die nach Anregung mit UV-Strahlung in unterschiedlichen Farben lumineszieren.

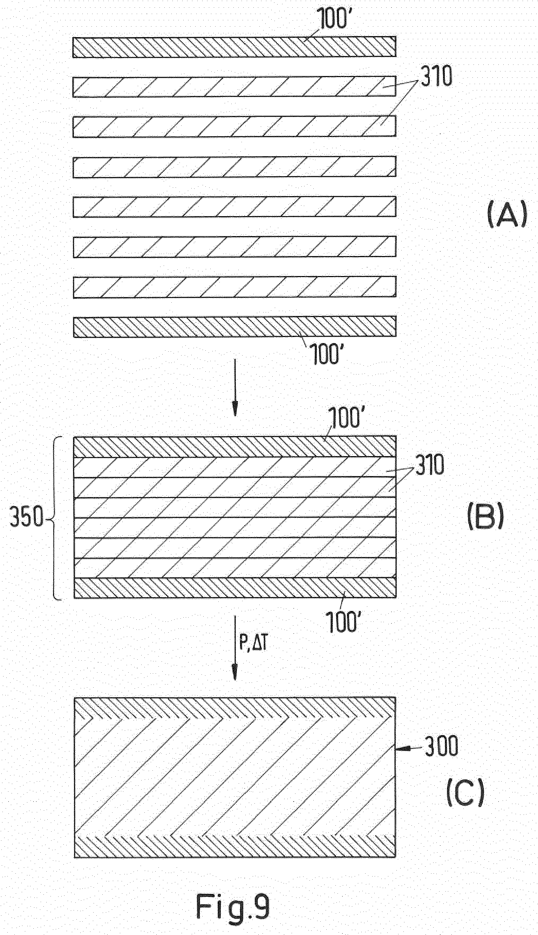

Eine Folie 100' wie die in Fig. 1A gezeigte kann beispielsweise mit mehreren anderen Polymerfolien 310 zu einem Folienkörper 300 laminiert werden, indem diese Folien 100', 310 zunächst bereitgestellt (Schritte (A), (B) des Verfahrens zum Herstellen eines Folienkörpers; Fig. 9A), dann diese Folien 100', 310 zu einem Stapel 350 zusammengetragen (Verfahrensschritt (C); Fig. 9B) und schließlich unter Anwendung von Wärme (ΔT) und Pressdruck (P) zu einem monolithischen Folienkörper 300 laminiert werden (Verfahrensschritt (D); Fig. 9C). Fig. 6 zeigt den Folienkörper 300 nach dem Laminieren und zusätzlichen beidseitigen Aufbringen von Schutzlackschichten 320. Nur zur näheren Veranschaulichung dienen die hier dargestellten Trennlinien zwischen den Folien 100', 310. Im fertig laminierten Folienkörper 300 sind diese Trennlinien nicht sichtbar.

Die weiteren Polymerfolien 310 können beispielsweise ebenfalls aus PC gebildet sein und eine Dicke von beispielsweise 50 bis 100 µm aufweisen. Die Schutzlackschichten 320 werden nach dem Laminieren aufgebracht. Der in Fig. 6 gezeigte Folienkörper 300 ist aus vier innenliegenden PC-Folien 310 und jeweils einer außenseitig angeordneten erfindungsgemäß hergestellten PC-Folie 100' mit darin eingelagerten Feststoffteilchen 170 (symbolisiert durch die Schraffur) zu einem Stapel 350 zusammengetragen und durch Lamination zum Folienkörper 300 hergestellt worden. Die Feststoffteilchen 170 können wiederum Melierfasern mit lumineszierenden Pigmenten oder auch andere Taggants sein.

Der in Fig. 7 gezeigte Folienkörper 300 (allerdings ebenfalls lediglich zur Veranschaulichung mit Trennlinien zwischen den Folien 100, 310 dargestellt, die nur vor dem Laminieren sichtbar sind), ist durch sechs herkömmliche PC-Folien 310 mittels Lamination gebildet und dann mit außenseitigen Schutzlackschichten in Form erfindungsgemäß hergestellter Polymerschichten 100 mit darin eingelagerten Feststoffteilchen 170 gebildet. Die Schutzlackschichten 100 mit darin eingelagerten Feststoffteilchen 170 werden erst nach der Lamination der PC-Folien 310 aufgebracht.

In Fig. 2 ist das erfindungsgemäße Verfahren zum Herstellen einer Polymerschicht 100 dargestellt.

Zunächst werden der feinteilige Feststoff 170 und die Flüssigzubereitung 130 bereitgestellt (Schritte a), b) des Verfahrens zur Herstellung einer mindestens einen feinteiligen Feststoff enthaltenden Polymerschicht). Der feinteilige Feststoff 170 kann beispielsweise ein feingemahlenes Lumineszenzpigment sein, zum Beispiel ein Pigment eines in ein Wirtsgitter eingelagerten Seltenerdelements. Die Flüssigzubereitung 130 kann durch einen Lack gebildet sein, der zum Beispiel durch ein organisches Lösungsmittel und ein darin gelöstes Präpolymer des Polymers, aus dem die Polymerschicht erzeugt werden soll, gebildet ist. Dann wird der Feststoff 170 in die Flüssigzubereitung 130 eingebracht, beispielsweise eingerührt (Verfahrensschritt c); Fig. 2 (i)). Durch diese Homogenisierung wird eine sehr gleichmäßige Verteilung des Feststoffes 170 in der Flüssigzubereitung 130 gebildet. Die Mischung aus dem Feststoff 170 und der Flüssigzubereitung 130 bildet ein Vorproduktmaterial 150 (Lack mit Feststoffteilchen). Durch bestimmte Zusatzstoffe, beispielsweise oberflächenaktive Stoffe, oder durch Mittel, die die Viskosität der Flüssigzubereitung erhöhen, beispielsweise höher molekulare Anteile der Matrix (Bindemittel), kann die Stabilität der Dispersion des Feststoffes 170 in der Flüssigkeit 130 erhöht werden.

Dieser Lack 150 kann dann auf einen Träger 500 (oder eine Polymerschichtunterlage 500') aufgegossen werden, sodass eine Schicht 160 des Lackes 150 auf dem Träger 500 (oder der Unterlage 500') gebildet wird (Verfahrensschritt d); Fig. 2 (ii)). Die Dicke dieser Schicht 160 kann bis zu 1000 µm betragen.

Anschließend wird der Lack 150 verfestigt, indem das darin enthaltene Lösungsmittel verdampft/verdunstet und/oder nicht (vollständig) polymerisierte Bestandteile des Lackes 150 polymerisiert werden. Hierzu wird die Schicht 160 des Lackes 150 einer Expositionsvorrichtung 400 ausgesetzt, beispielsweise einer flächigen Wärmequelle oder einer UV-Quelle, zum Beispiel einer UV-Lampe (Verfahrensschritt e); Fig.2 (iii)). Durch die Verfestigung der zunächst noch flüssigen Schicht 160 erstarrt diese, sodass die erfindungsgemäße Polymerschicht 100 gebildet wird.

Im vorliegenden Falle ist die Polymerschicht 100 auf einem Träger 500, beispielsweise einer Edelstahlplatte, gebildet worden. Daher kann die Polymerschicht 100 anschließend abgehoben/abgezogen werden. Die abgezogene Polymerschicht 100 bildet dann eine freitragende Polymerfolie 100'.

Für den Fall, dass die sich in der Polymerschicht 100 befindenden Feststoffteilchen 170, beispielsweise Melierfasern, zumindest teilweise über die Außenfläche der Polymerschicht 100 oder -folie 100' vorstehen, wird die Oberflächengüte der Polymerschicht 100 in einem weiteren Behandlungsschritt verbessert. Hierzu wird die Polymerschicht 100 oder -folie 100' einem Pressvorgang unterworfen. Für die Behandlung einer freitragenden Polymerfolie 100' ist dieser Behandlungsschritt in Fig. 8 gezeigt: Die Folie, aus deren Oberflächen Melierfasern 170 hervorstehen, wird zwischen zwei hochglanzpolierte Walzen 610, 620, zwischen denen ein Spalt 650 definierter Breite (beispielsweise 75 µm) vorgesehen ist, hindurchgeführt, sodass die vorstehenden Melierfasern 170 in das Material der Folie 100' eingedrückt werden. Damit dieser Vorgang mit ausreichender Wirksamkeit vonstatten geht, wird die Folie 100' diesem Pressvorgang noch vor dem Abschluss des Verfestigungsschrittes, d.h. vor dem vollständigen Verdampfen des Lösungsmittels und/oder Auspolymerisieren von Monomer und/oder Präpolymer gemäß Verfahrensschritt (e), unterworfen. Dadurch ist es möglich, dass die Fasern 170 noch in das Material der Folie 100' hineingedrückt werden können.

Entsprechendes gilt für den Fall, dass eine Polymerschicht 100, die sich beispielsweise auf einer Polymerfolienunterlage 500' befindet, dem Pressvorgang unterworfen werden soll.

Für die kontinuierliche Herstellung einer Polymerschicht 100 (Fig. 3) oder einer freitragenden Polymerfolie 100' (Fig. 4) wird das Vorproduktmaterial 150, beispielsweise ein Lack mit darin enthaltenen Feststoffteilchen 170 (nicht dargestellt), auf eine Polymerschichtunterlage 500' (Fig. 3) oder auf einen Träger 500 (Fig. 4) aufgebracht. Zumindest der Träger 500 ist als umlaufendes Band ausgeführt. Der Träger 500 und die Polymerschichtunterlage 500' werden über eine Umlenkrolle 720 geführt, sodass das in einer oberen Ebene geführte Band 500, 500' nach rechts und nach dem Passieren der Umlenkrolle 720 in einer unteren Ebene nach links befördert wird. Oberhalb des oben nach rechts geführten Bandes 500, 500' ist eine Auftragsvorrichtung 700, beispielsweise ein Flüssigkeitsspender, angeordnet. Mit dieser Auftragsvorrichtung 700 kann Vorproduktmaterial 150, beispielsweise ein Lack mit darin enthaltenen Feststoffteilchen 170, in einer dünnen Schicht auf die Oberfläche des Bandes 500, 500' aufgegossen werden.

In den in Fig. 3, 4 gezeigten Ausführungsbeispielen wird zusätzlich ein herkömmlicher Lack 330 ohne Feststoffteilchen auf die Oberfläche des Bandes 500, 500' aufgegossen. Während der die Feststoffteilchen 170 enthaltende Lack 150 in ersten Polymerschichtbereichen 220 auf die Bandoberfläche aufgegossen wird, wird der keinen Feststoff enthaltende herkömmliche Lack 330 auf zweite Polymerschichtbereiche 210 aufgegossen. Durch die Translationsbewegung des Bandes 500, 500' werden auf diese Weise parallel zueinander verlaufende Streifen gebildet, die sich in der Transportrichtung (Pfeil) erstrecken.

Im Falle des in Fig. 3 gezeigten Ausführungsbeispiels, bei dem der Feststoffteilchen 170 enthaltende Lack 150 sowie der herkömmliche Lack 330 auf eine Polymerfolienunterlage 500' aufgegossen wird, verbleibt die schließlich gebildete Polymerschicht 100 auf letzterer, da sie sich mit ihr fest verbindet. Gemeinsam bilden die Polymerschicht 100 und die Polymerschichtunterlage 500' sowie die verfestigte Schicht des herkömmlichen Lackes 330 eine Polymerfolie 100'. Wenn die Polymerschicht 100 und die Polymerschichtunterlage 500' aus demselben Polymer gebildet sind, beispielsweise aus PC, bildet sich eine sehr feste Verbindung zwischen beiden aus.

In diesem Falle kann die Polymerschichtunterlage 500' beispielsweise von einer (nicht dargestellten) ersten Vorratsrolle abgewickelt werden, von der aus sie von links kommend zur Auftragsvorrichtung 700 geführt wird, wo der Feststoffteilchen 170 enthaltende Lack 150 in den ersten Polymerschichtbereichen 220 und der herkömmliche Lack 330 in den zweiten Polymerschichtbereichen 210 aufgegossen wird. Beim Verfestigen der Lackschichten (nicht dargestellt) wird eine Polymerschicht 100 gebildet. Diese Polymerschicht 100 wird weiter nach rechts und nach dem Passieren der Umlenkrolle 720 wieder nach links und zur einer (ebenfalls nicht dargestellten) zweiten Vorratsrolle geleitet, wo die Polymerfolie 100' aufgewickelt wird.

Im Falle des in Fig. 4 gezeigten Ausführungsbeispiels werden der die Feststoffteilchen 170 enthaltende Lack 150 und der herkömmliche Lack 330 ohne Feststoffteilchen mittels der Auftragsvorrichtung 700 auf ein umlaufendes Edelstahlband 500, das einen Träger bildet, aufgegossen. Lackschichten werden wieder in verschiedenen Polymerschichtbereichen 220, 210 auf die Bandoberfläche aufgegossen und danach gemeinsam verfestigt (nicht dargestellt). Die gebildete Polymerschicht 100 bildet keine feste Verbindung zu dem Edelstahlband 500 aus, sodass sie von diesem abgezogen werden kann. Dabei bildet sich eine Polymerfolie 100'.

### Bezugszeichen:

- 100: Polymerschicht, Schutzlackschicht mit Feststoffteilchen
- 100': Polymerfolie
- 130: Flüssigzubereitung
- 150: Vorproduktmaterial, Lack
- 160: Schicht des Vorproduktmaterials, Lackschicht
- 170: feinteiliger Feststoff, Feststoffteilchen, Melierfasern
- 171: erste Melierfasern
- 172: zweite Melierfasern
- 210: (zweiter) Polymerschichtbereich
- 220: (erster) Polymerschichtbereich
- 230: Polymerschichtbereich
- 300: Folienkörper
- 310: Folie
- 320: Schutzlackschicht
- 330: Lack ohne feinteiligen Feststoff
- 350: Folienstapel
- 400: Expositionsvorrichtung
- 500: (Edelstahl-)Träger
- 500': Polymerfolienunterlage
- 600: Pressvorrichtung
- 610: Druckwalze
- 620: Gegendruckwalze
- 650: Spalt
- 700: Auftragsvorrichtung, Flüssigkeitsspender
- 720: Umlenkrolle
- P: Pressdruck
- ΔT: Wärmeeinbringung

## Patentansprüche

1. Verfahren zur Herstellung einer mindestens einen feinteiligen Feststoff (170) enthaltenden Polymerschicht (100), wobei der mindestens eine feinteilige Feststoff (170) ausgewählt ist aus einer Gruppe, bestehend aus Melierfasern, Planchetten, anorganischen feinteiligen Feststoffen in Form von Lumineszenzpigmenten, optisch variablen Farbpigmenten, holographischen Partikeln oder Nanopartikeln, und organischen feinteiligen Feststoffen in Form von lumineszierenden Buntpigmenten, umfassend die folgenden Verfahrensschritte:
a) Bereitstellen des mindestens einen feinteiligen Feststoffes (170);
b) Bereitstellen einer Flüssigzubereitung (130), die mindestens einen Stoff, ausgewählt aus einer Gruppe, umfassend Monomere, Präpolymere und Polymere, enthält;
c) Einbringen des mindestens einen feinteiligen Feststoffes (170) in die Flüssigzubereitung (130) und Homogenisieren der Flüssigzubereitung (130) unter Ausbildung eines den mindestens einen feinteiligen Feststoff (170) enthaltenden Vorproduktmaterials (150);
d) Erzeugen einer Schicht (160) des Vorproduktmaterials (150); und
e) Verfestigen des Vorproduktmaterials (150) unter Ausbildung der den mindestens einen feinteiligen Feststoff (170) enthaltenden Polymerschicht (100),
**dadurch gekennzeichnet**, das die Schicht (160) des Vorproduktmaterials (150) während Verfahrensschritt (e) einem Pressverfahren zur Oberflächenvergütung unterworfen wird.

2. Verfahren zur Herstellung einer mindestens einen feinteiligen Feststoff (170) enthaltenden Polymerschicht (100) nach Anspruch 1, **dadurch gekennzeichnet, dass** der mindestens eine feinteilige Feststoff (170) in Form von Melierfasern vorliegt.

3. Verfahren zur Herstellung einer mindestens einen feinteiligen Feststoff (170) enthaltenden Polymerschicht (100) nach einem der vorstehenden Ansprüche, **dadurch gekennzeichnet, dass** die Schicht (160) des Vorproduktmaterials (150) auf einer Unterlage (500, 500') erzeugt wird.

4. Verfahren zur Herstellung einer mindestens einen feinteiligen Feststoff (170) enthaltenden Polymerschicht (100) nach Anspruch 3, **dadurch gekennzeichnet, dass** die Schicht (160) des Vorproduktmaterials (150) durch Aufgießen des Vorproduktmaterials (150) auf die Unterlage (500, 500') erzeugt wird.

5. Verfahren zur Herstellung einer mindestens einen feinteiligen Feststoff (170) enthaltenden Polymerschicht (100) nach einem der Ansprüche 3 und 4, **dadurch gekennzeichnet, dass** die Unterlage ein Träger (500) ist, von dem die Polymerschicht (100) in Form einer Polymerfolie (100') nach Verfahrensschritt (e) abnehmbar ist.

6. Verfahren zur Herstellung einer mindestens einen feinteiligen Feststoff (170) enthaltenden Polymerschicht (100) nach einem der Ansprüche 3 und 4, **dadurch gekennzeichnet, dass** die Unterlage eine Polymerfolienunterlage (500') ist.

7. Verfahren zur Herstellung einer mindestens einen feinteiligen Feststoff (170) enthaltenden Polymerschicht (100) nach einem der vorstehenden Ansprüche, **dadurch gekennzeichnet, dass** die Schicht (160) des Vorproduktmaterials (150) in mindestens einem räumlich begrenzten ersten Polymerschichtbereich (220, 230) erzeugt wird.

8. Verfahren zur Herstellung einer mindestens einen feinteiligen Feststoff (170) enthaltenden Polymerschicht (100) nach einem der vorstehenden Ansprüche, **dadurch gekennzeichnet, dass** die Schicht (160) des Vorproduktmaterials (150) durch mindestens zwei Schichtbereiche (210, 220, 230) gebildet ist, die feinteilige Feststoffe (170; 171, 172) unterschiedlicher Typen enthalten.

9. Verfahren zur Herstellung einer mindestens einen feinteiligen Feststoff (170) enthaltenden Polymerschicht (100) nach einem der vorstehenden Ansprüche, **dadurch gekennzeichnet, dass** das Pressverfahren mittels mindestens eines einen Spalt (650) bildenden Walzenpaares (610, 620) ausgeführt wird.

10. Verfahren zur Herstellung einer mindestens einen feinteiligen Feststoff (170) enthaltenden Polymerschicht (100) nach einem der vorstehenden Ansprüche, **dadurch gekennzeichnet, dass** die Polymerfolie (100') aus Polycarbonat oder Polyethylenterephthalat gebildet ist.

11. Verfahren zur Herstellung eines Folienkörpers (300), umfassend die folgenden Verfahrensschritte:
(A) Herstellen mindestens einer mindestens einen feinteiligen Feststoff (170) enthaltenden Polymerfolie (100') durch Herstellen einer Polymerschicht (100) mit dem Verfahren nach einem der Ansprüche 1 bis 10, wobei der mindestens eine feinteilige Feststoff (170) ausgewählt ist aus einer Gruppe, bestehend aus Melierfasern, Planchetten, anorganischen feinteiligen Feststoffen in Form von Lumineszenzpigmenten, optisch variablen Farbpigmenten, holographischen Partikeln oder Nanopartikeln, und organischen feinteiligen Feststoffen in Form von lumineszierenden Buntpigmenten,;
(B) Bereitstellen mindestens einer weiteren Folie (310);
(C) Zusammentragen der mindestens einen den mindestens einen feinteiligen Feststoff (170) enthaltenden Polymerfolie (100') und der mindestens einen weiteren Folie (310) unter Ausbildung eines Folienstapels; und
(D) Laminieren des Folienstapels unter Ausbildung des Folienkörpers (300).

## Claims

1. Method for producing a polymer layer (100) having at least one finely divided solid (170), wherein the at least one finely divided solid (170) is selected from a group consisting of mottling fibres, planchettes, inorganic finely divided solids in the form of luminescence pigments, optically variable colour pigments, holographic particles or nanoparticles, and organic finely divided solids in the form of luminescing brightly coloured pigments, comprising the following method steps:
a) providing the at least one finely divided solid (170);
b) providing a liquid preparation (130), which contains at least one material, selected from a group comprising monomers, prepolymers, and polymers;
c) introducing the at least one finely divided solid (170) into the liquid preparation (130) and homogenising the liquid preparation (130) such that a pre-product material (150) containing the at least one finely divided solid (170) is formed;
d) producing a layer (160) of the pre-product material (150); and
e) solidifying the pre-product material (150) such that the polymer layer (100) containing the at least one finely divided solid (170) is formed, **characterised in that** during method step (e) the layer (160) of the pre-product material (150) is subjected to a pressing process for surface treatment.

2. Method for producing a polymer layer (100) having at least one finely divided solid (170) according to claim 1, **characterised in that** the at least one finely divided solid (170) is present in the form of mottled fibres.

3. Method for producing a polymer layer (100) having at least one finely divided solid (170) according to any one of the preceding claims, **characterised in that** the layer (160) of the pre-product material (150) is produced on an underlay (500, 500').

4. Method for producing a polymer layer (100) having at least one finely divided solid (170) according to claim 3, **characterised in that** the layer (160) of the pre-product material (150) is produced by casting the pre-product material (150) onto the underlay (500, 500').

5. Method for producing a polymer layer (100) having at least one finely divided solid (170) according to any one of claims 3 and 4, **characterised in that** the underlay is a carrier (500), from which the polymer (100) can be taken in the form of a polymer film (100') according to method step (e).

6. Method for producing a polymer layer (100) having at least one finely divided solid (170) according to any one of claims 3 and 4, **characterised in that** the underlay is a polymer film underlay (500').

7. Method for producing a polymer layer (100) having at least one finely divided solid (170) according to any one of the preceding claims, **characterised in that** the layer (160) of the pre-product (150) is produced in a first spatially limited polymer layer region (220, 230).

8. Method for producing a polymer layer (100) having at least one finely divided solid (170) according to any one of the preceding claims, **characterised in that** the layer (160) of the pre-product material (150) is formed by at least two layer regions (210, 220, 230), which contain finely divided solids (170; 171, 172) of different types.

9. Method for producing a polymer layer (100) having at least one finely divided solid (170) according to any one of the preceding claims, **characterised in that** the pressing process is carried out by means of at least one pair of rollers (610, 620) forming a gap (650).

10. Method for producing a polymer layer (100) having at least one finely divided solid (170) according to any one of the preceding claims, **characterised in that** the polymer film (100') is formed from polycarbonate or polyethylene terephthalate.

11. Method for producing a film body (300), comprising the following method steps:
(A) producing at least one polymer film (100') containing at least one finely divided solid (170) by producing a polymer layer (100) with the method according to any one of claims 1 to 10, wherein the at least one finely divided solid (170) is selected from a group consisting of mottling fibres, planchettes, inorganic finely divided solids in the form of luminescence pigments, optically variable colour pigments, holographic particles or nanoparticles, and organic finely divided solids in the form of luminescing brightly coloured pigments;
(B) providing at least one further film (310);
(C) bringing together the at least one polymer film (100') containing the at least one finely divided solid (170) and the at least one further film (310) with the formation of a film stack; and
(D) laminating the film stack, with the formation of the film body (300).

## Revendications

1. Procédé pour fabriquer une couche polymère (100) contenant au moins une matière solide à fines particules (170), dans lequel l'au moins une matière solide à fines particules (170) est choisie parmi un groupe constitué de fibres colorées, de planchettes, de matières solides à fines particules inorganiques sous la forme de pigments luminescents, de pigments de couleur variables optiquement, de particules holographiques ou de nanoparticules, et de matières solides à fines particules organiques sous la forme de pigments colorés luminescents, comprenant les étapes de procédé suivantes :
a) la fourniture de l'au moins une matière solide à particules fines (170) ;
b) la fourniture d'une préparation liquide (130) qui contient au moins une matière choisie parmi un groupe comprenant des monomères, des prépolymères et des polymères ;
c) l'introduction de l'au moins une matière solide à fines particules (170) dans la préparation liquide (130) et l'homogénéisation de la préparation liquide (130) en réalisant un matériau de produit de départ (150) contenant l'au moins une matière solde à fines particules (170) ;
d) la génération d'une couche (160) du matériau de produit de départ (150) ; et
e) la solidification du matériau de produit de départ (150) en réalisant la couche polymère (100) contenant l'au moins une matière solide à fines particules (170),
**caractérisé en ce que** la couche (160) du matériau de produit de départ (150) est soumise à un procédé de pressage pour une amélioration de surface pendant l'étape de procédé (e).

2. Procédé pour fabriquer une couche polymère (100) contenant au moins une matière solide à fines particules (170) selon la revendication 1, **caractérisé en ce que** l'au moins une matière solide à fines particules (170) est présente sous la forme de fibres colorées.

3. Procédé pour fabriquer une couche polymère (100) contenant au moins une matière solide à fines particules (170) selon l'une quelconque des revendications précédentes, **caractérisé en ce que** la couche (160) du matériau de produit de départ (150) est générée sur une base (500, 500').

4. Procédé pour fabriquer une couche polymère (100) contenant au moins une matière solide à fines particules (170) selon la revendication 3, **caractérisé en ce que** la couche (160) du matériau de produit de départ (150) est générée par application par coulée du matériau de produit de départ (150) sur la base (500, 500').

5. Procédé pour fabriquer une couche polymère (100) contenant au moins une matière solide à fines particules (170) selon l'une quelconque des revendications 3 et 4, **caractérisé en ce que** la base est un support (500), duquel la couche polymère (100) peut être retirée sous la forme d'un film polymère (100') après l'étape de procédé (e).

6. Procédé pour fabriquer une couche polymère (100) contenant au moins une matière solide à fines particules (170) selon l'une quelconque des revendications 3 et 4, **caractérisé en ce que** la base est une base en film polymère (500').

7. Procédé pour fabriquer une couche polymère (100) contenant au moins une matière solide à fines particules (170) selon l'une quelconque des revendications précédentes, **caractérisé en ce que** la couche (160) du matériau de produit de départ (150) est générée dans au moins une première zone de couche polymère (220, 230) délimitée spatialement.

8. Procédé pour fabriquer une couche polymère (100) contenant au moins une matière solide à fines particules (170) selon l'une quelconque des revendications précédentes, **caractérisé en ce que** la couche (160) du matériau de produit de départ (150) est formée par au moins deux zones de couche (210, 220, 230), qui contiennent des matières solides à fines particules (170 ; 171, 172) de différents types.

9. Procédé pour fabriquer une couche polymère (100) contenant au moins une matière solide à fines particules (170) selon l'une quelconque des revendications précédentes, **caractérisé en ce que** le procédé de pressage est exécuté au moyen d'au moins une paire de cylindres (610, 620) formant un interstice (650).

10. Procédé pour fabriquer une couche polymère (100) contenant au moins une matière solide à fines particules (170) selon l'une quelconque des revendications précédentes, **caractérisé en ce que** le film polymère (100') est formé à partir de polycarbonate ou de polytéréphtalate d'éthylène.

11. Procédé pour fabriquer un corps de film (300), comprenant les étapes de procédé suivantes :
(A) la fabrication d'au moins un film polymère (100') contenant au moins une matière solide à fines particules (170) en fabriquant une couche polymère (100) avec le procédé selon l'une quelconque des revendications 1 à 10, dans lequel l'au moins une matière solide à fines particules (170) est choisie parmi un groupe constitué de fibres colorées, de planchettes, de matières solides à fines particules inorganiques sous la forme de pigments luminescents, de pigments de couleur optiquement variables, de particules holographiques ou de nanoparticules, et de matière solides à fines particules organiques sous la forme de pigments colorés luminescents ;
(B) la fourniture d'au moins un autre film (310) ;
(C) l'assemblage de l'au moins un film polymère (100') contenant l'au moins une matière solide à fines particules (170) et de l'au moins un autre film (310) en réalisant un empilement de films ; et
(D) la stratification de l'empilement de films en réalisant le corps de film (300).
